# EUROPÄISCHE PATENTSCHRIFT

(11) **EP 2 765 324 B1**
(45) Veröffentlichungstag und Bekanntmachung des Hinweises auf die Patenterteilung: **04.10.2017**
(21) Anmeldenummer: 14152063.5
(22) Anmeldetag: 22.01.2014
(51) Int. Cl.: F16D 65/12

(54) **Bremsscheibe für eine Scheibenbremse eines Kraftfahrzeugs**
Brake disc for a disc brake in a motor vehicle
Disque de frein pour un frein à disque d'un véhicule automobile

(30) Priorität: 08.02.2013 DE 102013002300
(43) Veröffentlichungstag der Anmeldung: 13.08.2014
(73) Patentinhaber: AUDI AG, 85045 Ingolstadt (DE); Fritz Winter Eisengiesserei GmbH & Co. KG, 35260 Stadtallendorf (DE)
(72) Erfinder: Saame, Christoph, 85080 Gaimershaim (DE); Becker, Reiner, 35466 Rabenau (DE); Posch, Volker, 35274 Kirchhain (DE)

(56) Entgegenhaltungen:
- EP-A1- 1 122 456
- DE-A1-102006 043 945
- DE-A1-102007 001 211
- DE-A1-102008 021 625
- DE-A1-102008 044 339
- DE-A1-102008 046 546

## Beschreibung

Die Erfindung betrifft eine Bremsscheibe für eine Scheibenbremse eines Kraftfahrzeugs gemäß der im Oberbegriff des Patentanspruches 1 angegebenen Art.

Ein Bremsscheiben-Reibring wird konventionell im Gießverfahren - in der Regel Sandguss - aus hochgekohltem Grauguss hergestellt. Grauguss ist aus mehreren Gründen ein optimaler Werkstoff für Reibkörper. Das Tragteil der Bremsscheibe wird schon seit längerem bei mehreren Anwendungen aus Aluminium bzw. Aluminiumlegierungen hergestellt, um Gewicht zu sparen. Bei diesen Konstruktionen wird auf eine radiale Beweglichkeit zwischen Reibring und Bremsscheibentopf wert gelegt, um thermomechanische Spannungen, die im Reibring bei jedem Bremsvorgang entstehen, zu minimieren. Der radiale Freiheitsgrad wird über ein durch mechanische Bearbeitung erzeugtes Passungsspiel und einem eingesetzten Verbindungselement hergestellt. Konzeptbedingt verursachen die aufwendige mechanische Bearbeitung zwischen dem Gießvorgängen und die erforderliche Passungstoleranzen hohe Fertigungskosten. Eine derartige Bremsscheibe ist z.B. in der EP 2 275 702 B1 offenbart.

Die DE 101 03 639 A1 zeigt die Verbindung zwischen Tragteil und den Verbindungselementen als formschlüssige Verbindung, während die Befestigung zwischen Reibring und den Verbindungselementen stoffschlüssig, z.B. mittels Schweißen oder Löten, erfolgt. Aufgrund der stoffschlüssigen Verbindung zwischen Reibring und Verbindungselementen ist in Hinblick auf Güte und Position der Verbindung lediglich eine unbefriedigende (ungünstige) Befestigung gewährleiste. Während Lötverbindungen bei Temperaturen oberhalb der Schmelztemperatur des Lötmittels lose werden und damit eine undefinierte Verbindung darstellen, neigen Schweißverbindungen in den Randzonen durch Gefügeänderungen zu einem Festigkeitsabfall.

Eine beim Bremsen durch hohen Temperatureinfluss sich teilweise oder ganz lösende stoffschlüssige Verbindung kann zu einer reversiblen und/oder irreversiblen Verformung (Planschlag, Welligkeit, Unwucht) der Bremsscheibe führen. Dies begünstigt den unerwünschten ungleichmäßigen Verschleiß am Reibring und führt zum sogenannten "Bremsenrubbeln", was den Fahrkomfort beeinträchtigt. Unter Umständen kann eine bleibende Verformung der Bremsscheibe zu einer Unbrauchbarkeit der gesamten Bremsanlage führen.

Da sich zudem stoffschlüssige Verbindungen bekanntlich durch eine gute Wärmeleitfähigkeit auszeichnen, begünstigen diese eine hohe Wärmeübertragung vom Reibring zu den Verbindungselementen. Dies wiederum hat zur Folge, dass auch über die Kontaktstellen der Verbindungselemente zum Tragteil ein erhöhter Wärmeeintrag in das Tragteil stattfindet.

Die daraus resultierenden Temperaturdifferenzen zwischen den Kontaktstellen und dem restlichen Tragteil, können ebenfalls zu einem Verzug des Tragteils führen, da sich der äußere Bereich des Tragteils stärker ausdehnt als der innere Bereich. Daher kann es zu einem unerwünschten Wärmeverzug kommen, der das Tragteil im Sinne einer "Welligkeit" verzieht und zu einem Planschlag führt, der auf den Reibring übertragen wird.

Eine gattungsgemäße, sämtliche Merkmale des Oberbegriffs des Patentanspruches 1 aufweisende innenbelüftete Bremsscheibe ist weiterhin aus der DE 10 2008 021 625 A1 bekannt.

Der Erfindung liegt die Aufgabe zugrunde, eine Bremsscheibe gemäß der im Oberbegriff des Patentanspruches 1 angegebenen Art derart weiterzubilden, dass neben einer langen Lebensdauer der Bremsscheibe auch ein hoher Fahrkomfort und eine hohe Sicherheit gewährleistet ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst die Bremsscheibe für eine Scheibenbremse eines Kraftfahrzeugs ein topfförmiges Tragteil und einen Reibring. Hierbei sind das Tragteil und der Reibring über mehrere in Umfangsrichtung verteilt angeordnete, sich in radialer Richtung erstreckende, als separate Bauteile ausgebildete Verbindungselemente in radialer Richtung betrachtet fest miteinander verbunden. Topfseitig, d.h. die Verbindung zwischen Tragteil und Verbindungselement, sind die Verbindungsmittel formschlüssig mit dem Tragteil und dem Reibring verbunden.

Erfindungsgemäß weisen die Verbindungselemente an ihrem dem Tragteil und ihrem dem Reibring zugewandten Endbereich Ausnehmungen und/oder Vorsprünge auf und sind die Verbindungselemente mittels Verbundguss mit dem Tragteil und dem Reibring formschlüssig verbunden. Die Ausbildung von Ausnehmungen und/oder Vorsprünge, z.B. in Form einer umlaufenden Nut, erweisen sich als vorteilhaft, da die Vertiefung beim Gießvorgang Material zur formschlüssigen Verbindung ohne Radialspiel eindringen kann.

Die erfindungsgemäße Bremsscheibe erweist sich als besonders vorteilhaft, da nunmehr aufgrund der formschlüssigen Verbindung eine in Hinblick auf Güte und Position definierte Verbindung gewährleistet ist, die sich insbesondere auch durch eine geringere Wärmeübertragung auszeichnet. D.h., dass aufgrund der formschlüssigen Verbindung in vorteilhafter Weise nunmehr auch bei hohen Temperarturen eine befriedigende Befestigung gewährleistet, bei der zudem ein Festigkeitsabfall und/oder eine erhöhte Wärmeübertragung nicht zu befürchten ist. Dies hat zur Folge, dass beim Bremsen eine reversible und/oder irreversible Verformung (Planschlag, Welligkeit, Unwucht) nicht auftritt. Somit wird ein "Rubbeln" des Reibrinngs verhindert, was sich positiv auf den Fahrkomfort und den Scheibenverschleiß auswirkt.
Vorzugsweise handelt es sich bei der Bremsscheibe um eine innenbelüftete Bremsscheibe, d.h. der Reibring weist mehrere Kühlkanäle auf.
Gemäß einer besonders vorteilhaften Ausführungsform der Erfindung sind die Verbindungselemente als Hohlkörper ausgebildet. Die Ausbildung der Verbindungselemente als rohrförmige Hohlkörper erweist sich für eine innenbelüfte Bremsscheibe als besonders vorteilhaft, da hierdurch eine Zuführung von Kühlluft in die Kühlkanäle der Bremsscheibe ermöglicht ist.

Gemäß einer anderen Ausführungsform der Erfindung sind die Verbindungselemente aus Vollmaterial ausgebildet. Die Ausbildung der Verbindungselemente aus Vollmaterial erweist sich fertigungstechnisch von Vorteil, da ein Abdichten der Verbindungselemente nicht erforderlich ist und somit eine einfache und kostengünstige Herstellung ermöglicht ist.
Vorzugsweise sind die Verbindungselemente stiftförmig, einen runden oder eckigen Querschnitt aufweisend, ausgebildet.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.
Die Erfindung wird im Folgenden anhand des in der Zeichnung dargestellten Ausführungsbeispiels näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine Schnittdarstellung einer erfindungsgemäßen Bremsscheibe;
- Fig. 2: eine Schnittdarstellung entlang der Linie A-A der Bremsscheibe aus Fig. 1;
- Fig. 3: eine Schnittdarstellung entlang der Linie B-B der Bremsscheibe aus Fig. 2, und
- Fig. 4: eine vergrößerte Darstellung der Verbindungselemente.

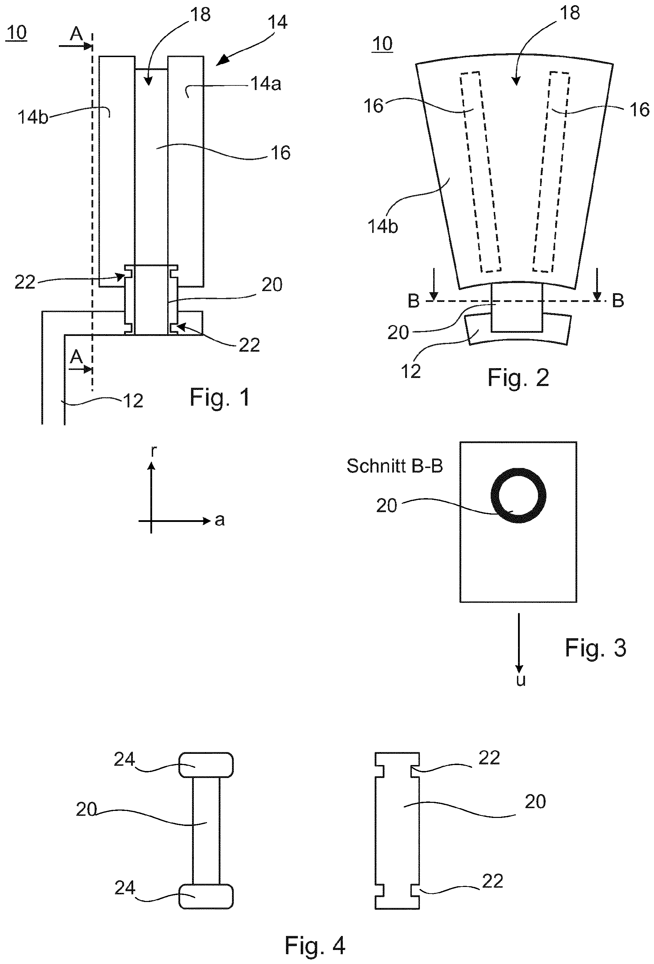

Fig. 1 und 2 zeigen eine insgesamt mit dem Bezugszeichen 10 bezeichnete Bremsscheibe für ein Kraftfahrzeug.

Die Bremsscheibe 10 weist ein topfförmiges Tragteil 12 sowie einen Reibring 14 auf.

Wie Fig. 1 zu entnehmen ist, handelt es sich bei dem Reibring 14 um einen belüfteten Reibring umfassend eine Reibringhälfte 14a und eine Reibringhälfte 14b, die über Stege 16 miteinander verbunden sind, so dass zwischen den Reibringhälften 14a, 14b Kühlkanäle 18 vorhanden sind.

Vorliegend sind Tragteil 12 und Reibring 14 im Gießverfahren hergestellt. Während das Tragteil 12 aus einer Aluminiumlegierung besteht, wurde der Reibring 14 aus Grauguss hergestellt.

Wie Fig. 1 und 2 weiter zu entnehmen ist, sind Tragteil 12 und Reibring 14 über mehrere, in Umfangsrichtung u betrachtet verteilt angeordnete Verbindungselemente 20 miteinander verbunden.

Wie insbesondere Fig. 1 zu entnehmen ist, ist über das Verbindungselement 20 der Reibring 14 formschlüssig, d.h. radial fest mit dem Tragteil 12 verbunden.

Gemäß der in Fig. 1 dargestellten Ausführungsform ist das Verbindungselement 20 in Form eines Hohlkörpers ausgebildet und weist an seinem dem Reibring 14 zugeordneten Endbereich sowie seinem dem Tragteil 12 zugeordneten Endbereich jeweils eine umlaufende Nut 22 auf.

Das Verbindungselement 20 wird mittels Verbundguss mit dem Reibring 14 und dem Tragteil 12 verbunden. Beim Gießen fließt Material in die umlaufende Nut 22 ein, sodass eine formschlüssige Verbindung zwischen den Verbindungselementen 20 und Tragteil 12 bzw. den Verbindungselementen 20 und dem Reibring 14 gewährleistet ist.

Wie Fig. 3 nochmals deutlich zu entnehmen ist, handelt es sich vorliegend bei dem Verbindungselement 20 um einen Hohlkörper. Hierdurch wird die Zuführung von Kühlluft in die Kühlkanäle 18 gewährleistet.

Eine andere Ausführungsform der Verbindungselemente 20 ist in Fig. 4 dargestellt: Die stiftförmigen Verbindungselemente 20 sind hierbei aus Vollmaterial ausgebildet. Während das rechts dargestellte Verbindungselement an seinen Endbereichen jeweils eine Vertiefung in Form einer umlaufenden Nut 22 aufweist, ist bei dem links dargestellten Verbindungselement 20 ein umlaufender Vorsprung 24 ausgebildet.

### Bezugszeiehenliste

- 10: Bremsscheibe
- 12: Tragteil
- 14: Reibring
- 14a: Reibringhälfte
- 14b: Reibringhälfte
- 16: Stege
- 18: Kühlkanäle
- 20: Verbindungselement
- 22: Vertiefung/Nut
- 24: umlaufender Vorsprung

- a: axialer Richtung
- r: radialer Richtung
- u: Umfangsrichtung

## Patentansprüche

1. Bremsscheibe (10) für eine Scheibenbremse eines Kraftfahrzeugs, umfassend ein topfförmiges Tragteil (12) und einen Reibring (14), bei der das Tragteil (12) und der Reibring (14) über mehrere in Umfangsrichtung (u) verteilt angeordnete, sich in radialer Richtung (r) erstreckende, als separate Bauteile ausgebildete Verbindungselemente (20) in radialer Richtung (r) fest miteinander verbunden sind, wobei die Verbindungselemente (20) formschlüssig mit dem Tragteil (12) und dem Reibring (14) verbunden sind, **dadurch gekennzeichnet, dass** die Verbindungselemente (20) an ihrem dem Tragteil (12) und ihrem dem Reibring (14) zugewandten Endbereich Ausnehmungen und/oder Vorsprünge (22, 24) aufweisen und mittels Verbundguss mit dem Tragteil (12) und dem Reibrings (14) formschlüssig verbunden sind.

2. Bremsscheibe (10) nach Anspruch 1, **dadurch gekennzeichnet, dass** der Reibring (14) mehrere Kühlkanäle aufweist.

3. Bremsscheibe (10) nach Anspruch 1 oder 2, **dadurch gekennzeichnet, dass** die Verbindungselemente (20) als Hohlkörper ausgebildet sind.

4. Bremsscheibe (10) nach Anspruch 1 oder 2, **dadurch gekennzeichnet, dass** die Verbindungselemente (20) aus Vollmaterial ausgebildet sind.

5. Bremsscheibe (10) nach einem der vorhergehenden Ansprüche, **dadurch gekennzeichnet, dass** die Verbindungselemente (20) stiftförmig, einen runden oder eckigen Querschnitt aufweisend, ausgebildet sind.

## Claims

1. Brake disc (10) for a disc brake in a motor vehicle, comprising a pot-shaped load-bearing portion (12) and a friction ring (14), in which the load-bearing portion (12) and the friction ring (14) are fixedly connected with each other in a radial direction (r) by means of a plurality of connecting elements (20) disposed distributed in as circumferential direction (u), extending in a radial direction (r) and formed as separate construction elements, wherein the connecting elements (20) are connected in a form-locking manner with the load-bearing portion (12) and the friction ring (14), **characterised in that** the connecting elements (20) have recesses and/or projections (22, 24) at their end portion facing the load-bearing portion (12) and facing the friction ring (14), and are connected in a form-locking manner with the load-bearing portion (12) and the friction ring (14) by means of compound casting.

2. Brake disc (10) according to claim **1, characterised in that** the friction ring (14) has a plurality of cooling channels.

3. Brake disc (10) according to claim 1 or 2, **characterised in that** the connecting elements (20) are in the form of hollow bodies.

4. Brake disc (10) according to claim 1 or 2, **characterised in that** the connecting elements (20) are in the form of solid material.

5. Brake disc (10) according to one of the previous claims, **characterised in that** the connecting elements (20) are formed in pencil-shape, having a round or angular cross-section.

## Revendications

1. Disque de frein (10) pour un frein à disque d'un véhicule automobile, comprenant une partie porteuse (12) en forme de cloche et un anneau de frottement (14),
dans lequel la partie porteuse (12) et l'anneau de frottement (14) sont assemblés de manière fixe dans la direction radiale (r) par l'intermédiaire de plusieurs éléments d'assemblage (20) qui sont agencés de manière répartie dans la direction circonférentielle (u), qui s'étendent dans la direction radiale (r) et qui sont conçus comme des éléments séparés,
les éléments d'assemblage (20) étant assemblés par concordance de forme à la partie porteuse (12) et à l'anneau de frottement (14),
**caractérisé en ce que** les éléments d'assemblage (20) comportent des évidements et/ou des parties en saillie (22, 24) au niveau de leur extrémité proche de la partie porteuse (12) et de leur extrémité proche de l'anneau de frottement (14) et sont assemblés par concordance de forme à la partie porteuse (12) et à l'anneau de frottement (14) au moyen d'une coulée composite.

2. Disque de frein (10) selon la revendication 1, **caractérisé en ce que** l'anneau de frottement (14) comporte plusieurs canaux de refroidissement.

3. Disque de frein (10) selon la revendication 1 ou 2, **caractérisé en ce que** les éléments d'assemblage (20) sont conçus comme des corps creux.

4. Disque de frein (10) selon la revendication 1 ou 2, **caractérisé en ce que** les éléments d'assemblage (20) sont conçus en un matériau plein.

5. Disque de frein (10) selon l'une des revendications précédentes, **caractérisé en ce que** les éléments d'assemblage (20) sont conçus en forme de broches ayant une section transversale ronde ou carrée.
